# FASCICULE DE BREVET EUROPEEN

(11) **EP 0 883 261 B1**
(45) Date de publication et mention de la délivrance du brevet: **11.08.2004**
(21) Numéro de dépôt: 98410054.5
(22) Date de dépôt: 22.05.1998
(51) Int. Cl.: H04L 7/033

(54) **Circuit de détection d'erreur de réception dans une transmission asynchrone**
Schaltungsanordnung zur Erkennung eines Empfangsfehlers in einer asynchronen Übertragung
Circuit for detecting reception error in an asynchronous transmission

(30) Priorité: 28.05.1997 FR 9706820
(43) Date de publication de la demande: 09.12.1998
(73) Titulaire: STMicroelectronics S.A., 92120 Montrouge (FR)
(72) Inventeur: Belot, Didier, 38140 Rives (FR)
(74) Mandataire: de Beaumont, Michel

(56) Documents cités:
- WO-A-94/19885
- GB-A- 2 204 467
- US-A- 4 737 971
- US-A- 4 984 255

## Description

La présente invention concerne un circuit de réception de bits transmis de manière asynchrone, et plus particulièrement un circuit de détection d'erreur de réception.

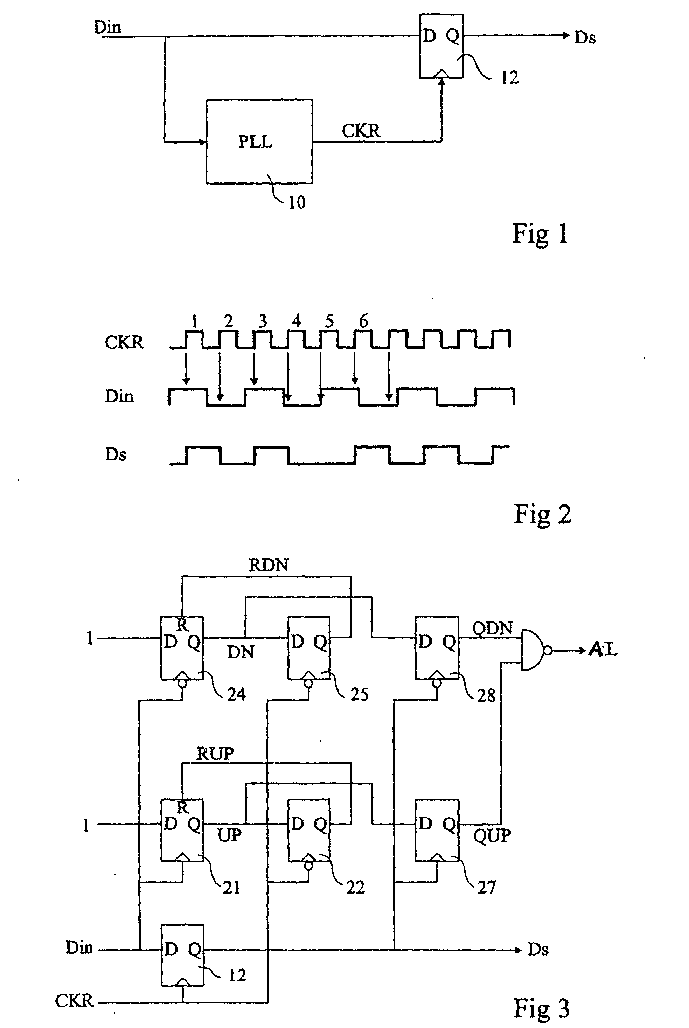

La figure 1 représente schématiquement un circuit de réception de bits transmis sur un signal asynchrone Din. Le signal Din est fourni à une boucle à verrouillage de phase (PLL) 10 pour reconstruire un signal d'horloge CKR dont la période est en principe égale à la largeur des bits du signal Din. L'horloge reconstruite CKR sert à échantillonner le signal asynchrone Din à l'aide d'une bascule 12 pour fournir les bits échantillonnés sur un signal synchrone Ds. Idéalement, le signal CKR est tel que la bascule 12 échantillonne chaque bit du signal asynchrone Din en son centre.

Un tel circuit est décrit dans le document US-A-4 984 255.

La précision de l'horloge reconstruite CKR dépend de divers facteurs, notamment de la régularité de la variation du signal asynchrone Din. Le signal asynchrone Din est aléatoire, mais il peut souvent présenter plusieurs bits consécutifs à un même état, ce qui provoque une dérive de la boucle à verrouillage de phase 10 vers une fréquence plus faible. Par ailleurs, des impulsions parasites dans le signal asynchrone Din sont susceptibles d'entraîner une dérive de la boucle à verrouillage de phase 10 vers une fréquence plus élevée.

Lorsque la fréquence de l'horloge reconstruite CKR n'est pas exactement calée sur la vitesse de transmission du signal asynchrone Din, le circuit finit inévitablement par faire des erreurs d'échantillonnage.

La figure 2 représente un exemple de chronogramme des signaux du circuit de la figure 1, illustrant une erreur survenant lorsque la fréquence de l'horloge reconstruite CKR est plus élevée que la vitesse de transmission des bits sur le signal Din. Par souci de simplification, les signaux ont été représentés sous forme carrée. En réalité, ces signaux présentent des transitions douces. On a également négligé les délais de commutation et de propagation des bascules.

Dans cet exemple, les bits successifs transmis sur le signal Din changent d'état d'un bit au suivant, et le signal Din est échantillonné à chaque front montant du signal d'horloge CKR.

Au premier front montant de l'horloge CKR, un bit du signal Din, à 1, est échantillonné dans des conditions idéales, c'est-à-dire sensiblement en son centre. Le signal Ds passe à 1 lors de ce front montant.

Il arrive un moment où deux fronts montants successifs de l'horloge CKR, ici les quatrième et cinquième, surviennent à l'intérieur d'un même bit du signal Din. En d'autres termes, le même bit est échantillonné deux fois, ce qui provoque une erreur. Dans l'exemple de la figure 2, le signal synchrone Ds présente, au moment où survient l'erreur, deux bits successifs à 0.

Lorsque l'horloge CKR est trop lente, il arrive un moment où deux de ses fronts montants successifs surviennent avant et après un bit du signal Din, ce qui provoque la perte de ce bit.

Une solution classique pour détecter des erreurs dans un tel système est de comparer le signal de commande de l'oscillateur de la boucle à verrouillage de phase 10 à des seuils haut et bas sensiblement équidistants de la valeur nominale du signal de commande. Lorsque le signal de commande atteint l'un de ces seuils, cela veut dire que la boucle à verrouillage de phase a dérivé et donc que l'horloge reconstruite est mauvaise. Les seuils doivent être suffisamment écartés de la valeur nominale pour ne pas être atteints par des variations du signal de commande autour de la valeur nominale, liées au bruit et à des tolérances de fabrication. Ainsi, la détection d'erreurs est particulièrement lente à réagir et, lorsqu'elle réagit, des bits en nombre important et inconnu sont erronés.

Un objet de la présente invention est de prévoir un circuit de détection d'erreur à réaction rapide.

Un autre objet de la présente invention est de prévoir un tel circuit de détection d'erreur qui fournisse une indication pour chaque bit erroné.

Ces objets sont atteints dans un circuit de réception de bits transmis sur un signal asynchrone, comprenant un circuit de fourniture d'une horloge reconstruite à partir du signal asynchrone, cette horloge servant à échantillonner le signal asynchrone pour former un signal de sortie synchrone, et un circuit de détection d'erreur de réception. Le circuit de détection d'erreur de réception comprend un détecteur de fronts fournissant une impulsion de détection à chaque front de sens prédéterminé du signal asynchrone ; et un circuit d'alarme activant un signal d'alarme lorsqu'un front de sens prédéterminé du signal synchrone survient en dehors d'une impulsion de détection.

Selon un mode de réalisation de la présente invention, le circuit d'alarme comprend une bascule pour échantillonner les impulsions de détection sur des fronts de sens prédéterminé du signal synchrone et active le signal d'alarme lorsque la sortie de la bascule d'échantillonnage change d'état.

Selon un mode de réalisation de la présente invention, le détecteur de fronts fournit une impulsion de détection pour chaque front montant et une impulsion de détection pour chaque front descendant du signal asynchrone, le circuit d'alarme activant le signal d'alarme lorsqu'un front montant du signal synchrone survient en dehors d'une impulsion de détection correspondant à un front montant du signal asynchrone ou lorsqu'un front descendant du signal synchrone survient en dehors d'une impulsion correspondant à un front descendant du signal asynchrone.

Selon un mode de réalisation de la présente invention, le détecteur de fronts comprend une première bascule cadencée à partir du signal asynchrone, recevant un état actif sur son entrée de données, et fournissant des impulsions de détection ; et une deuxième bascule cadencée à partir de l'horloge reconstruite, recevant les impulsions de détection sur son entrée de données, et fournissant un signal de réinitilisation de la première bascule.

Selon un mode de réalisation de la présente invention, la deuxième bascule est cadencée par le complément de l'horloge reconstruite, la première bascule étant cadencée directement par le signal asynchrone pour détecter des fronts montants ou par le complément du signal asynchrone pour détecter des fronts descendants.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1, précédemment décrite, représente schématiquement un circuit classique de réception de bits transmis de manière asynchrone ;
la figure 2, précédemment décrite, illustre une erreur survenant lorsqu'une horloge reconstruite est de fréquence trop élevée par rapport à la vitesse de transmission des bits ;
la figure 3 représente un mode de réalisation de circuit de détection d'erreur selon la présente invention ;
la figure 4 représente un chronogramme illustrant le fonctionnement du circuit de la figure 3 lorsque la fréquence de l'horloge reconstruite est plus élevée que la vitesse de transmission des bits ; et
la figure 5 représente un chronogramme illustrant le fonctionnement du circuit de la figure 3 lorsque la fréquence de l'horloge reconstruite est plus faible que la vitesse de transmission des bits.

Un circuit de détection d'erreurs de réception selon la présente invention est prévu pour détecter les fronts du signal asynchrone et vérifier que des fronts correspondants surviennent effectivement dans le signal synchrone.

La figure 3 représente de nouveau la bascule d'échantillonnage 12 cadencée par l'horloge reconstruite CKR, recevant le signal de transmission asynchrone Din et fournissant le signal synchrone Ds. Le signal asynchrone Din est fourni à un détecteur de fronts montants formé à partir de deux bascules de type D 21 et 22, et à un détecteur de fronts descendants formé à partir de deux bascules de type D 24 et 25. Les bascules 21 et 24 sont cadencées respectivement par le signal Din et par le complément de ce signal Din. Chacune des bascules 21 et 24 reçoit sur son entrée D de donnée l'état 1. Ainsi, dès que le signal Din présente un front montant, la bascule 21 passe à l'état 1 et dès que le signal Din présente un front descendant, c'est la bascule 24 qui passe à l'état 1.

Les bascules 22 et 25 servent à réinitialiser les bascules 21 et 24 au plus tard à l'expiration d'une période de l'horloge reconstruite CKR après la mise à 1 des bascules 21 et 24. Les bascules 22 et 25 sont cadencées par le complément de l'horloge CKR et reçoivent respectivement les sorties Q des bascules 21 et 24. Les sorties RUP et RDN des bascules 22 et 25 sont fournies respectivement à des entrées R de remise à zéro prioritaire des bascules 21 et 24.

Avec cette configuration, la bascule 21 fournit une impulsion UP à chaque front montant du signal Din et la bascule 24 fournit une impulsion DN à chaque front descendant du signal Din, la largeur de ces impulsions étant au plus égale à une période de l'horloge reconstruite CKR.

Les impulsions UP sont échantillonnées par une bascule de type D 27 aux fronts montants du signal synchrone Ds, tandis que les impulsions DN sont échantillonnées par une bascule de type D 28 aux fronts descendants du signal Ds. Lorsqu'au moins une des sorties QUP et QDN des bascules 27 et 28 passe à zéro, cela veut dire qu'un front du signal synchrone Ds ne survient pas pendant une impulsion UP ou DN, et donc que ce front ne survient pas suffisamment près d'un front correspondant du signal asynchrone Din. Ainsi, un signal d'alarme AL est activé par une porte NON ET 30 lorsque l'une des sorties QUP et QDN des bascules 27, 28 passe à zéro.

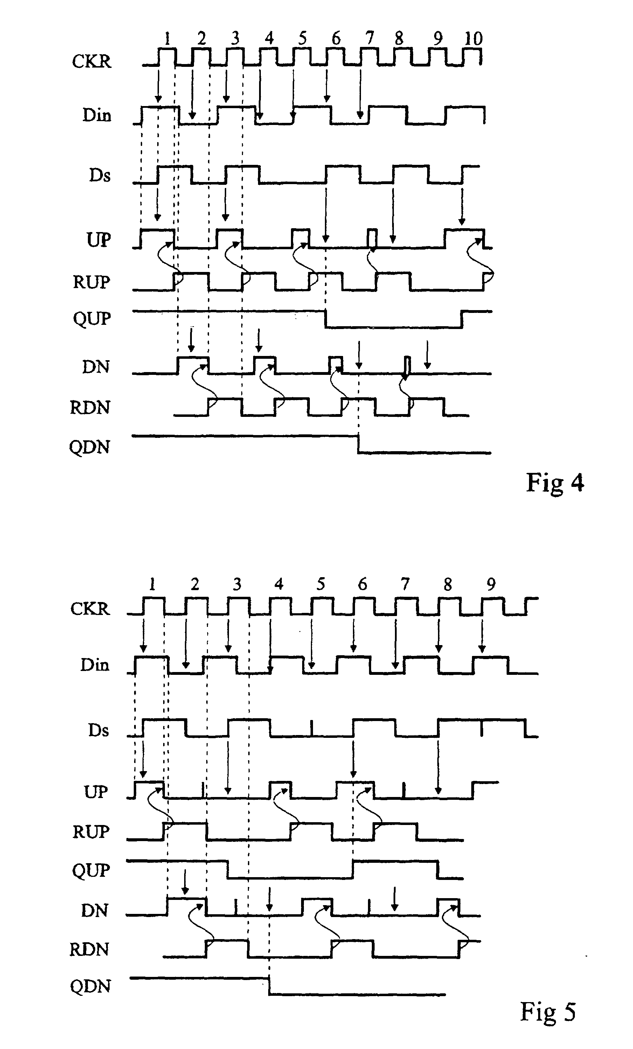

La figure 4 représente un chronogramme illustrant le fonctionnement du circuit de la figure 3, à titre d'exemple, dans le même cas que celui de la figure 2, c'est-à-dire où la fréquence de l'horloge reconstruite CKR est plus élevée que la vitesse de transmission des bits sur le signal asynchrone Din.

Pour des raisons de clarté, les délais de commutation et de propagation des bascules sont négligés dans les chronogrammes, et les signaux sont représentés sous forme carrée.

Comme cela a été décrit en relation avec la figure 2, une erreur se produit autour de la cinquième impulsion d'horloge CKR, où le signal Ds fournit deux bits successifs à zéro, alors que les états de ces deux bits devraient être différents. On s'aperçoit que la largeur des impulsions UP et DN diminue progressivement, ce qui diminue les chances pour que les signaux UP et DN soient échantillonnés à l'état 1 par les fronts du signal synchrone Ds. Les deux premiers fronts montants du signal Ds surviennent chacun pendant une impulsion UP, mais le troisième front montant du signal Ds survient après la troisième impulsion UP, ce qui provoque le passage à zéro du signal QUP, et donc le déclenchement du signal d'alarme AL.

De même, les deux premiers fronts descendants du signal synchrone Ds surviennent chacun pendant une impulsion DN, mais le troisième front descendant du signal Ds survient après la troisième impulsion DN, ce qui provoque le passage à zéro du signal QDN. L'alarme AL est déclenchée par le premier des signaux QUP et QDN qui passe à zéro (ici le signal QUP).

La figure 4 représente également les signaux RUP et RDN de remise à zéro, respectivement, des bascules 21 et 24. Le signal RUP prend l'état du signal UP à chaque front descendant de l'horloge reconstruite CKR. Dès que le signal RUP passe à 1, le signal UP est remis à zéro. De même, le signal RDN prend l'état du signal DN à chaque front descendant de l'horloge CKR et remet à zéro le signal DN dès qu'il passe à 1. Par souci de clarté, les figures ne tiennent pas compte des temps de propagation des bascules.

La figure 5 représente un chronogramme des mêmes signaux que la figure 4, illustrant le fonctionnement du circuit de la figure 3 lorsque la fréquence de l'horloge reconstruite CKR est plus faible que la vitesse de transmission des bits sur le signal Din. Dans ce cas, il arrive un moment où deux fronts d'échantillonnage successifs de l'horloge CKR, ici les quatrième et cinquième fronts montants, surviennent avant et après un bit du signal Din (ici à 1). Il en résulte que le signal synchrone Ds présente un bit erroné, ici au cinquième front montant du signal CKR.

Les allures des signaux UP et DN diffèrent de celles de la figure 4. En effet, il manque des impulsions UP et DN par rapport au nombre de fronts montants et descendants du signal Din. Par exemple, lorsque survient le deuxième front montant du signal Din, il s'avère que le signal RUP de remise à zéro du signal UP est encore à 1, puisque le front descendant suivant de l'horloge CKR, qui est destiné à provoquer le changement d'état du signal RUP, ne survient qu'après le front montant du signal Din. Il en résulte que le signal UP est maintenu à zéro pendant le front montant du signal Din, puisque la remise à zéro est prioritaire. Un phénomène similaire se produit dans le signal DN pour le deuxième front descendant du signal Din.

Le premier front montant du signal Ds survient convenablement pendant la première impulsion UP et le premier front descendant du signal Ds survient convenablement pendant la première impulsion DN. Toutefois, les deuxièmes fronts montant et descendant du signal Ds surviennent en dehors d'impulsions UP et DN, ce qui provoque le passage à zéro des signaux QUP et QDN lors de ces fronts. Le signal d'alarme AL est activé dès le front descendant du signal QUP.

On s'aperçoit dans la figure 5 qu'une alarme est activée avant même que l'erreur se produise dans le signal synchrone Ds. Ceci ne constitue pas un risque de mauvaise détection d'erreur car, même si la fréquence du signal CKR variait dans le sens tendant à compenser l'erreur, cette variation serait si lente que l'erreur se produirait de toute façon.

Dans les figures 4 et 5, on s'aperçoit en outre qu'une erreur est détectée à proximité de la survenue de l'erreur, ce qui veut dire qu'une erreur est détectée pratiquement immédiatement. En outre, au moins un des signaux QUP et QDN, comme on le voit pour le signal QUP dans les figures 4 et 5, passe à l'état bas puis repasse à l'état haut pour chaque erreur. Ceci permet de détecter le nombre d'erreurs en comptant le nombre de fronts descendants de celui des signaux QUP et QDN qui change le plus souvent d'état.

Si le signal asynchrone varie régulièrement comme cela est représenté dans les exemples, on peut se permettre d'utiliser un seul détecteur de fronts 21 ou 22, associé à sa bascule d'échantillonnage 27 ou 28. En effet, on constate que, en cas d'erreur, chacun des signaux QUP et QDN change d'état pour indiquer une erreur.

Toutefois, si le signal asynchrone Din est susceptible de présenter un grand nombre de bits consécutifs à un même état, il est préférable d'utiliser les deux détecteurs de fronts pour obtenir une détection plus rapide. En effet, seul le détecteur de fronts descendants sert à la fin de plusieurs bits consécutifs à 1, alors que seul le détecteur de fronts montants sert à la fin de plusieurs bits consécutifs à zéro.

## Revendications

1. Circuit de réception de bits transmis sur un signal asynchrone (Din), comprenant un circuit (10) de fourniture d'une horloge reconstruite (CKR) à partir du signal asynchrone, cette horloge servant à échantillonner le signal asynchrone pour former un signal de sortie synchrone (Ds), et un circuit de détection d'erreur de réception, **caractérisé en ce que** le circuit de détection d'erreur de réception comprend :
- un détecteur de fronts (21, 22 ; 24, 25) apte à fournir une impulsion de détection (UP, DN) à chaque front de sens prédéterminé du signal asynchrone (Din) ; et
- un circuit d'alarme (27, 28, 30) apte à activer un signal d'alarme (AL) lorsqu'un front de sens prédéterminé du signal synchrone (Ds) survient en dehors d'une impulsion de détection (UP, DN).

2. Circuit selon la revendication 1, **caractérisé en ce que** le circuit d'alarme comprend une bascule (27, 28) pour échantillonner les impulsions de détection (UP, DN) sur des fronts de sens prédéterminé du signal synchrone (Ds) et pour activer le signal d'alarme lorsque la sortie de la bascule d'échantillonnage change d'état.

3. Circuit selon la revendication 1 ou 2, **caractérisé en ce que** le détecteur de fronts est apte à fournir une impulsion de détection pour chaque front montant et une impulsion de détection pour chaque front descendant du signal asynchrone (Din), le circuit d'alarme étant apte à activer le signal d'alarme lorsqu'un front montant du signal synchrone (Ds) survient en dehors d'une impulsion de détection correspondant à un front montant du signal asynchrone (Din) ou lorsqu'un front descendant du signal synchrone survient en dehors d'une impulsion correspondant à un front descendant du signal asynchrone.

4. Circuit selon la revendication 1 ou 3, **caractérisé en ce que** le détecteur de fronts comprend :
- une première bascule (21, 24) cadencée à partir du signal asynchrone (Din), recevant un état actif sur son entrée de données, et fournissant des impulsions de détection (UP, DN) ; et
- une deuxième bascule (22, 25) cadencée à partir de l'horloge reconstruite (CKR), recevant les impulsions de détection sur son entrée de données, et fournissant un signal (RUP, RDN) de réinitilisation de la première bascule.

5. Circuit selon la revendication 4, **caractérisé en ce que** la deuxième bascule (22, 25) est cadencée par le complément de l'horloge reconstruite (CKR), la première bascule (21, 24) étant cadencée directement par le signal asynchrone (Din) pour détecter des fronts montants ou par le complément du signal asynchrone pour détecter des fronts descendants.

## Patentansprüche

1. Schaltung zum Empfang von auf einem Asynchronsignal (Din) übertragenen Bits, mit einer Schaltung (10) zur Lieferung eines ausgehend von dem Asynchronsignal rekonstruierten Taktsignals (CKR), wobei dieses Taktsignal zum Sampeln des Asynchronsignals zur Bildung eines synchronen Ausgangssignals (Ds) dient, sowie mit einer Schaltung zum Nachweis von Empfangsfehlern, **dadurch gekennzeichnet, dass** die Empfangsfehler-Nachweisschaltung umfasst:
- einen Flankendetektor (21, 22; 24, 25), der bei jeder Flanke vorgegebener Richtung des Asynchronsignals (Din) einen Detektions- bzw. Nachweisimpuls (UP, DN) zu liefern vermag; sowie
- eine Alarmschaltung (27, 28, 30), die ein Alarmsignal (AL) zu aktivieren vermag, sobald eine Flanke vorbestimmter Richtung des Synchronsignals (Ds) außerhalb einem Detektionsimpuls (UP, DN) auftritt.

2. Schaltung nach Anspruch 1, **dadurch gekennzeichnet, dass** die Alarmschaltung eine Kippschaltung (27, 28) umfasst, zum Sampeln der Detektionsimpulse (UP, DN) an Flanken vorgegebener Richtung des Synchronsignals (Ds) und zur Aktivierung des Alarmsignals, sobald die Ausgangsgröße der Sampling-Kippstufe ihren Zustand ändert.

3. Schaltung nach Anspruch 1 oder 2, **dadurch gekennzeichnet, dass** der Flankendetektor einen Detektionsimpuls für jede aufsteigende Flanke (Vorderflanke) und einen Detektionsimpuls für jede absteigende Flanke (Hinterflanke) des Asynchronsignals (Din) zu liefern vermag, dass die Alarmschaltung das Alarmsignal zu aktivieren vermag, sobald eine aufsteigende oder Vorderflanke des Synchronsignals (Ds) außerhalb einem einer aufsteigenden oder Vorderflanke des Asynchronsignals (Din) entsprechenden Detektionsimpuls auftritt, oder falls eine absteigende oder Hinterflanke des Synchronsignals außerhalb einem einer abfallenden oder Hinterflanke des Asynchronsignals entsprechenden Impuls auftritt.

4. Schaltung nach Anspruch 1 oder 3, **dadurch gekennzeichnet, dass** der Flankendetektor umfasst:
- eine ausgehend von dem Asynchronsignal (Din) getaktete erste Kippstufe (21, 24), welche an ihrem Dateneingang einen aktiven Zustand zugeführt erhält und Detektionsimpulse (UP, DN) liefert; sowie
- eine ausgehend von dem rekonstruierten Taktsignal (CKR) getaktete zweite Kippstufe (22, 25), welche an ihrem Dateneingang Detektionsimpulse zugeführt erhält und ein Signal (RUP, RDN) zur Reinitialisierung der ersten Kippstufe liefert.

5. Schaltung nach Anspruch 4, **dadurch gekennzeichnet, dass** die zweite Kippstufe (22, 25) mit dem Komplement des rekonstruierten Taktsignals (CKR) getaktet wird, und dass die erste Kippstufe (21, 24) direkt durch das Asynchronsignal (Din) getaktet wird zur Detektion der aufsteigenden oder Vorderflanken oder durch das Komplement des Asynchronsignals zur Detektion der abfallenden oder Hinterflanken.

## Claims

1. A circuit for receiving bits transmitted on an asynchronous signal (Din), including a circuit (10) for providing a clock (CKR) reconstructed from the asynchronous signal, this clock being used to sample the asynchronous signal to form a synchronous output signal (Ds), and a reception error detection circuit, **characterized in that** the reception error detection circuit includes:
- an edge detector (21, 22; 24, 25) capable of providing a detection pulse (UP, DN) for each edge of predetermined direction of the asynchronous signal (Din) ; and
- an alarm circuit (27, 28, 30) capable of activating an alarm signal (AL) when an edge of predetermined direction of the synchronous signal (Ds) occurs outside a detection pulse (UP, DN).

2. The circuit of claim 1, **characterized in that** the alarm circuit includes a flip-flop (27, 28) for sampling the detection pulses (UP, DN) at edges of predetermined direction of the synchronous signal (Ds) and activating the alarm signal when the output of the sampling flip-flop switches.

3. The circuit of claim 1 or 2, **characterized in that** the edge detector is capable of providing a detection pulse for each rising edge and a detection pulse for each falling edge of the asynchronous signal (Din), the alarm circuit being capable of activating the alarm signal when a rising edge of the synchronous signal (Ds) occurs outside a detection pulse corresponding to a rising edge of the asynchronous signal (Din) or when a falling edge of the synchronous signal occurs outside a pulse corresponding to a falling edge of the asynchronous signal.

4. The circuit of claim 1 or 3, **characterized in that** the edge detector includes:
- a first flip-flop (21, 24) clocked from the asynchronous signal (Din), receiving an active state on its data input, and providing detection pulses (UP, DN); and
- a second flip-flop (22, 25) clocked from the reconstructed clock (CKR) receiving the detection pulses on its data input, and providing a reset signal (RUP, RDN) for the first flip-flop.

5. The circuit of claim 4, **characterized in that** the second flip-flop (22, 25) is clocked by the complement of the reconstructed clock (CKR), the first flip-flop (21, 24) being directly clocked by the asynchronous signal (Din) to detect rising edges or by the complement of the asynchronous signal to detect falling edges.
